Europäisches Patentamt

(19) **European Patent Office**

**Office européen des brevets**

(11) Numéro de publication: **0 066 540**
**B1**

(12) **FASCICULE DE BREVET EUROPEEN**

(45) Date de publication du fascicule du brevet:
**05.12.84**

(21) Numéro de dépôt: **82810217.8**

(22) Date de dépôt: **21.05.82**

(51) Int. Cl.³: **C 01 B 3/04, C 01 B 17/06,**
**B 01 J 23/06, B 01 J 23/46,**
**B 01 J 27/00**

(54) **Procédé de fabrication d'hydrogène et de soufre élémentaire par oxydoréduction photochimique de l'hydrogène sulfuré et des sulfures.**

(30) Priorité: **03.06.81 CH 3636/81**

(43) Date de publication de la demande:
**08.12.82 Bulletin 82/49**

(45) Mention de la délivrance du brevet:
**05.12.84 Bulletin 84/49**

(84) Etats contractants désignés:
**CH DE FR GB IT LI NL**

(56) Documents cités:
**FR - A - 2 432 475**
**US - A - 3 933 608**
**US - A - 3 962 409**

**HELVETICA CHIMICA ACTA, vol. 64, no. 35, Fase 1,
février 1981 BASEL (CH) K. KALYANASUNDARAM et al.:
"Visible Light Induced Water Cleavage in CdS
Dispersions loaded with Pt and RuO2, Hole Scavenging
by RuO2" pages 362-366**

(73) Titulaire: **Graetzel, Michael, 2, Chemin Pontfilet,
CH-1093 La Conversion (CH)**

(72) Inventeur: **Kalyanasundaram, Kuppuswamy, 20, rte de
Praz-Véguey, CH-1022 Chavannes (CH)**
Inventeur: **Borgarello, Enrico, 7, rue du Château,
CH-1026 Echandens (CH)**
Inventeur: **Pelizzetti, Ezio, Via Pietro Giuria 5,
I-10126 Torino (IT)**

(74) Mandataire: **Vuille, Roman et al, c/o KIRKER & Cie
S.A. 14, rue du Mont-Blanc Case Postale 872,
CH-1211 Genève 1 (CH)**

## Description

On sait que les rayonnements électromagnétiques, et en particulier le rayonnement solaire, peuvent dissocier l'eau en hydrogène et oxygène en présence de catalyseurs choisis parmi les matières semi-conductrices. Ce processus a été proposé pour capter l'énergie solaire sous une forme stockable. Cependant, l'hydrogène sulfuré, qui est un important sous-produit des industries utilisant les combustibles fossiles, peut s'avérer être une source d'hydrogène plus intéressante que l'eau, compte tenu de son enthalpie de dissociation qui est plus basse que celle de l'eau et compte tenu également de la possibilité de valoriser le soufre. Des avantages similaires peuvent être escomptés de la dissociation photochimique des sulfures de métaux en milieu aqueux, dans la mesure où ces sulfures sont au moins faiblement solubles dans l'eau.

On a maintenant découvert que l'oxydoréduction photochimique de l'hydrogène sulfuré et des sulfures de métaux par un rayonnement électromagnétique produit de l'hydrogène et du soufre élémentaire avec un excellent rendement et à une vitesse élevée lorsque l'on irradie l'hydrogène sulfuré ou le sulfure en solution dans un solvant et en présence d'un catalyseur consistant en une matière semi-conductrice dont la surface destinée à être illuminée est recouverte d'une couche transparente d'oxyde de ruthénium $RuO_2$.

On utilise un solvant aqueux en particulier lorsque la matière première soufrée est un sulfure de métal, afin que l'eau constitue la source d'hydrogène comme expliqué plus haut. Lorsque la matière première soufrée est l'hydrogène sulfuré, l'eau peut être remplacée par un solvant organique, comme par exemple le sulfure de carbone, l'acétonitrile et le diméthylsulfoxyde.

On a constaté, dans le cas d'un solvant aqueux, qu'un pH basique augmente nettement la vitesse de l'oxydoréduction. Ainsi, on a observé un quadruplement de la vitesse de production de l'hydrogène en passant du pH 0 au pH 14.

La matière semi-conductrice utilisée comme catalyseur peut être choisie en particulier parmi le sulfure de cadmium CdS, le séléniure de cadmium CdSe, le phosphure de gallium GaP et le silicium. Le catalyseur est de préférence exempt de platine, car il s'est avéré que le platine n'apporte aucun avantage dans l'oxydoréduction photochimique de l'hydrogène sulfuré et des sulfures de métaux, contrairement à l'oxydoréduction de l'eau. La matière semi-conductrice peut être sous forme de particules macroscopiques ou sous forme colloïdale. La forme colloïdale a pour avantage de permettre une récupération facile du soufre réduit au moyen d'une simple filtration, car le catalyseur reste en solution colloïdale et peut être réutilisé.

En l'absence d'oxyde de ruthénium, la matière semi-conductrice donne des résultats insuffisants. On a constaté que, toutes choses égales, l'oxyde de ruthénium peut doubler la vitesse de la réaction d'oxydoréduction. En particulier, on a constaté une augmentation de la vitesse de production de l'hydrogène de 1,5 fois lorsque la teneur en $RuO_2$ des particules de sulfure de cadmium passait de 0,1 à 0,2%. L'effet favorable de l'oxyde de ruthénium est probablement lié à une accélération du transfert des trous du réseau de la matière semi-conductrice entre la bande de valence et l'interface avec les ions $S^{--}$ de la matière première soufrée. Cette accélération du transfert des trous réduit la destruction des trous par recombinaison avec les électrons.

On augmente l'activité du catalyseur en lui conférant un dopage favorisant la conductibilité de type n. Dans le cas du sulfure de cadmium, ce dopage peut être réalisé en remplaçant une faible fraction des ions $S^{--}$ par des ions moins chargés négativement, tels que des ions $Cl^-$, et/ou en remplaçant une faible fraction des ions $Cd^{++}$ par des ions plus chargés positivement, tels que des ions $In^{+++}$. Par exemple, on peut calciner du sulfure de cadmium préalablement imprégné de trichlorure d'indium, ce qui permet d'obtenir simultanément les deux types de substitution. Cependant, il est préférable d'utiliser du trichlorure de ruthénium comme imprégnant du sulfure de cadmium. Le sulfure de cadmium imprégné de trichlorure de ruthénium est calciné à une température de l'ordre de 300°C, tout d'abord sous atmosphère inerte, puis en présence d'oxygène. On obtient ainsi en une seule opération le dopage et le revêtement des particules de sulfure de cadmium par une couche de $RuO_2$.

*Exemple 1 :*

Pour préparer le catalyseur, on a mélangé intimement 200 mg de poudre de sulfure de cadmium à 99,99% avec 50 ml d'une solution de 60 mg de $RuCl_3$, aq. pur (10% $H_2O$) dans 3 ml d'eau. Après avoir séché la poudre à l'air pendant 15 min, on l'a chauffée à 300°C tout d'abord, pendant 30 min sous un courant d'argon, puis pendant 2 à 5 min à l'air, après quoi on l'a laissée refroidir à l'air. Ce traitement thermique a formé un dépôt de $RuO_2$ sur la surface des particules de CdS, et un dopage de type n par substitution d'ions $Cl^-$ aux ions $S^{--}$ dans le réseau de CdS. La quantité de $RuO_2$ déposée sur le CdS est de 0,1% en poids.

Ces particules de CdS chargées de $RuO_2$ ont été dispersées dans des solutions aqueuses de sulfure et irradiées à la lumière visible. On a irradié 25 ml d'une solution aqueuse de $Na_2S$ 0,1M (pH 3) contenant en suspension 25 mg de CdS chargé de 0,025 mg de $RuO_2$ avec une lampe à incandescence à halogène de 250 W (Oriel) munie d'une jaquette d'eau de 15 cm et d'un filtre arrêtant les radiations de longueur d'onde inférieure à 400 nm, pour éliminer respectivement les radiations IR et UV. Après une brève période d'induction, l'hydrogène s'est dégagé régulièrement à un débit de 3,2 ml/h. On a poursuivi l'expérience jusqu'à un volume total de 54 ml $H_2$, ce qui correspond à une conversion de 90% de $H_2S$ en $H_2$ et des rapports molaires $H_2$/CdS et $H_2$/$RuO_2$ de respectivement 11 et $1,2 \times 10^4$. Le soufre réduit précipite et se rassemble à la surface de la solution, ce qui permet de le récupérer en le séparant du catalyseur.

*Exemple 2:*

En irradiant dans les mêmes conditions 25 ml d'une solution aqueuse de $Na_2S$ 0,1 M et de pH 13 et contenant 25 mg de CdS chargé de 0,2% de $RuO_2$, on a obtenu une vitesse de dégagement de 9 ml/h d'hydrogène.

*Exemple 3:*

On a procédé comme dans l'exemple 1, mais en remplaçant la poudre de sulfure de cadmium par du sulfure de cadmium colloïdal. La dispersion aqueuse de catalyseur a été préparée comme suit:

On a dissous du Calgon C (marque de fabrique désignant de l'hexamétaphosphate de sodium) dans de l'eau neutre à raison de 0,5 mg de Calgon C/l, puis on a ajouté à la solution du nitrate de cadmium $Cd(NO_3)_2$ à raison de 0,001 mol/l. On a injecté lentement dans cette solution du sulfure de sodium $Na_2S$ à raison de 0,01 mol/l. (Pour cette injection, on a utilisé une solution-stock de $Na_2S$ 0,1 M dans l'eau.) Une solution colloïdale de sulfure de cadmium à pH 7,5 s'est ainsi formée. La taille des particules est d'environ 200 Å. On a ajouté à cette solution colloïdale de CdS 1,8 ml d'une solution aqueuse d'oxyde de ruthénium $RuO_4$ contenant 100 mg $RuO_4$/l. En l'espace d'environ 30 min, le $RuO_4$ se décompose spontanément en $O_2$ et $RuO_2$ qui se dépose sur les particules de CdS en quantité de 0,1% en poids par rapport à CdS.

## Revendications

1. Procédé de fabrication d'hydrogène et de soufre élémentaire par oxydoréduction photochimique de l'hydrogène sulfuré et des sulfures de métaux par un rayonnement électromagnétique, caractérisé en ce que l'on irradie l'hydrogène sulfuré ou le sulfure de métal en solution dans un solvant et en présence d'un catalyseur consistant en une matière semi-conductrice dont la surface destinée à être illuminée est recouverte d'une couche transparente d'oxyde de ruthénium $RuO_2$.

2. Procédé selon la revendication 1, caractérisé en ce que le solvant comprend de l'eau.

3. Procédé selon la revendication 1, caractérisé en ce que le solvant est un solvant oragnique, par exemple le sulfure de carbone, l'acétonitrile, le diméthylsulfoxyde.

4. Procédé selon l'une des revendications précédentes, caractérisé en ce que le catalyseur est exempt de platine.

5. Procédé selon l'une des revendications précédentes, caractérisé en ce que la matière semi-conductrice est choisie parmi le sulfure de cadmium CdS, le séléniure de cadmium CdSe, le phosphure de gallium GaP et le silicium.

6. Procédé selon l'une des revendications précédentes, caractérisé en ce que la matière semi-conductrice est du sulfure de cadmium sous forme colloïdale.

7. Procédé selon l'une des revendications précédentes, caractérisé en ce que la matière semi-conductrice est une matière dopée de type n.

8. Procédé selon la revendication 7, caractérisé en ce que la matière semi-conductrice est du sulfure de cadmium dopé par substitution d'ions $Cl^-$ à une partie des ions $S^{--}$.

9. Procédé de préparation du catalyseur selon la revendication 8, caractérisé en ce que le dopage est obtenu par calcination du sulfure de cadmium imprégné d'un chlorure dissociable à la température de calcination.

10. Procédé selon la revendication 9, caractérisé en ce que le sulfure de cadmium est imprégné de chlorure de ruthénium $RuCl_3$, puis est calciné à environ 300°C sous atmosphère inerte pour dissocier le $RuCl_3$, et est ensuite calciné en présence d'oxygène pour oxyder le ruthénium en $RuO_2$.

11. Procédé selon l'une des revendications 1 à 8, caractérisé en ce que l'on irradie l'hydrogène sulfuré ou le sulfure de métal en milieu aqueux basique, de préférence à un pH de 13 à 14.

## Patentansprüche

1. Herstellungsverfahren für Wasserstoff und Elementarschwefel durch photochemische Sauerstoffreduktion des geschwefelten Wasserstoffs und der Metallsulfiden durch eine elektromagnetische Strahlung, dadurch gekennzeichnet, dass der geschwefelte Wasserstoff oder das Metallsulfid, das in einem Lösungsmittel gelöst ist, in Gegenwart eines Katalysators bestrahlt wird, wobei der Katalysator aus einem halbleitenden Stoff besteht, dessen eine Oberfläche, welche vorgesehen ist, um beleuchtet zu werden, von einer durchlässigen Rutheniumoxyd $RuO_2$-Schicht bedeckt ist.

2. Verfahren gemäss Anspruch 1, dadurch gekennzeichnet, dass das Lösungsmittel Wasser enthält.

3. Verfahren gemäss Anspruch 1, dadurch gekennzeichnet, dass das Lösungsmittel ein organisches Lösungsmittel ist, zum Beispiel das Kohlenstoffsulfid, das Acetonitril, das Dimethylschwefeloxyd.

4. Verfahren gemäss einem der vorangehenden Ansprüche, dadurch gekennzeichnet, dass der Katalysator kein Platin enthält.

5. Verfahren gemäss einem der vorangehenden Ansprüche, dadurch gekennzeichnet, dass der Halbleiterstoff unter dem Cadmiumsulfid CdS, dem Cadmiumselenid CdSe, dem Galliumphosphid GaP und dem Silizium gewählt ist.

6. Verfahren gemäss einem der vorangehenden Ansprüche, dadurch gekennzeichnet, dass der Halbleiterstoff Cadmiumsulfid CdS in kolloidaler Form ist.

7. Verfahren gemäss einem der vorangehenden Ansprüche, dadurch gekennzeichnet, dass der Halbleiterstoff ein dotierter Stoff des Typus n ist.

8. Verfahren gemäss Anspruch 7, dadurch gekennzeichnet, dass der Halbleiterstoff durch Substitution von einem Teil der S⁻⁻ -lonen durch Cl⁻-lonen dotiertes Cadmiumsulfid ist.

9. Verfahren zur Vorbereitung des Katalysators gemäss Anspruch 8, dadurch gekennzeichnet, dass die Dotierung durch Calcinierung mit einem bei Calcinierungstemperatur zersetzbarem Chlorid imprägniertem Cadmiumsulfid erhalten wird.

10. Verfahren gemäss Anspruch 9, dadurch gekennzeichnet, dass das Cadmiumsulfid mit Rutheniumchlorid RuCl₃ imprägniert wird, dann dass es bei ca. 300°C unter inerter Atmosphäre, um das RuCl₃ zu zersetzen, calciniert wird und dass es anschliessend in Gegenwart von Sauerstoff calciniert wird, um das Ruthenium in RuO₂ zu oxydieren.

11. Verfahren gemäss einem der Ansprüche 1 bis 8, dadurch gekennzeichnet, dass der geschwefelte Wasserstoff oder das Metallsulfid in einem basischen wässerigen Medium mit einem pH zwischen 13 und 14 bestrahlt wird.

## Claims

1. Process for the generation of hydrogen and elementary sulfur by means of photochemical oxido-reduction of hydrogen sulfide or metal sulfides induced by electro-magnetic irradiation, which comprises irradiating a solution of hydrogen sulfide or of metal sulfide in a solvent, in the presence of catalyst consisting of a semi-conductive matter composition, the surface of which to be irradiated is coated with a transparent deposit of ruthenium oxide (RuO₂).

2. Process according to claim 1, wherein the solvent comprises water.

3. Process according to claim 1, wherein the solvent is an organic solvent as, for example, carbon sulfide, acetonitrile or dimethylsulfoxide.

4. Process according to one of the preceding claims, wherein the catalyst is free from platinum.

5. Process according to one of the preceding claims, wherein the semi-conductive composition of matter is selected from the group consisting of cadmium sulfide (CdS), cadmium selenide (CdSe), gallium phosphide (GaP) and silicium.

6. Process according to one of the preceding claims, wherein the semi-conductive composition of matter is colloidal cadmium sulfide.

7. Process according to one of the preceding claims, wherein the semi-conductive composition of matter is a n type activated composition of matter.

8. Process according to claim 7, wherein the semi-conductive composition of matter is cadmium sulfide activated by substituting Cl⁻ anions for some of the S⁻⁻ anions.

9. Process for preparing a catalyst according to claim 8, wherein the activation of said catalyst is achieved by calcination of cadmium sulfide impregnated with a chloride which can be cleaved at the calcination temperature.

10. Process according to claim 9, wherein cadmium sulfide is impregnated with ruthenium chloride (RuCl₃), calcinated at about 300°C under inert atmosphere in order to achieve RuCl₃ cleavage and then calcinated in the presence of oxygen to transform ruthenium into ruthenium oxide (RuO₂).

11. Process according to one of claims 1 to 8, which comprises irradiating hydrogen sulfide or metal sulfide in an alkaline aqueous medium, preferably at a pH comprised between 13 and 14.